# EUROPÄISCHE PATENTSCHRIFT

(11) **EP 0 809 902 B1**
(45) Veröffentlichungstag und Bekanntmachung des Hinweises auf die Patenterteilung: **16.07.2003**
(21) Anmeldenummer: 96902867.9
(22) Anmeldetag: 15.02.1996
(51) Int. Cl.: H04L 7/00

(54) **ANORDNUNG ZUR RÜCKGEWINNUNG EINES ZEITTAKTES AUS EINEM MODULIERTEN OPTISCHEN EINGANGSSIGNAL**
DEVICE FOR RECOVERING A CLOCK FROM A MODULATED OPTICAL INPUT SIGNAL
DISPOSITIF POUR LA RECUPERATION D'UN SIGNAL D'HORLOGE CONTENU DANS UN SIGNAL OPTIQUE MODULE D'ENTREE

(30) Priorität: 21.02.1995 DE 19505980
(43) Veröffentlichungstag der Anmeldung: 03.12.1997
(73) Patentinhaber: SIEMENS AKTIENGESELLSCHAFT, 80333 München (DE)
(72) Erfinder: CREMER, Cornelius, D-85586 Poing (DE)
(86) Internationale Anmeldenummer: DE9600241
(87) Internationale Veröffentlichungsnummer: WO96026585

(56) Entgegenhaltungen:
- IEEE JOURNAL OF QUANTUM ELECTRONICS, Bd. 28, Nr. 4, 1.April 1992, Seiten 895-900, XP000272714 MASAHIKO JINNO ET AL: "OPTICAL TANK CIRCUITS USED FOR ALL-OPTICAL TIMING RECOVERY"
- PATENT ABSTRACTS OF JAPAN vol. 014, no. 352 (P-1085), 30.Juli 1990 & JP,A,02 126243 (NIPPON TELEGR & TELEPH CORP), 15.Mai 1990,

## Beschreibung

Anordnungen zur Rückgewinnung eines Zeittaktes aus einem auf einer optischen Eingangsträgerwellenlänge mit diesem Takt getakteten modulierten optischen Eingangssignal sind beispielsweise aus D.M. Patrick, R.J. Manning: 20Gbit/s all-optical clock recovering using semiconductor nonlinearity, Electr. Lett. Vol. 30 (1994), S. 151-152; A.D. Ellis, K. Smith, D.M. Patrick: Alloptical clock recovery at bit rates up to 40 GTbit/s, Electr. Lett. Vol. 29 (1993), S. 1323-1324 oder P.E. Barnsley, H.J. Wickes, E.G. Wickens, D.M. Spirit: All-optical clock recovery from 5 Gb/s RZ Data using a self-pulsating 1.56 um Laser diode, IEEE Phot. Tech. Lett., Vol. 3 (1991) S. 942-945 bekannt, wobei bei diesen Anordnungen der Zeittakt durch Modelocken (= modelocking) eines Lasers an das modulierte Eingangssignal rückgewonnen wird. Es wird zum Modelocken immer ein nichtlineares optisches Element in einem optischen Resonator benötigt. Als nichtlineare optische Elemente werden optische Verstärker (siehe Electr. Lett. Vol. 30 (1994), S. 151-152), Glasfasern (siehe Electr. Lett. Vol. 29 (1993), S. 1323-1324), sättigbare Absorber (siehe IEEE Phot. Tech. Lett., Vol. 3 (1991) S. 942-945) und Sektionen von Mehrsektions-DFB-Lasern (siehe U. Feiste, D.J. As, A. Erhardt: 18 GHz all-optical frequency locking and clock recovery using a self-pulsating two-section DFB laser, IEEE Phot. Tech. Lett. Vol. 6 (1994), S. 106-108 oder R.J. Manning, D.A.O. Davies, D. Cotter, J.K. Lucek: Enhanced recovery rates in semiconductor laser amplifiers using optical pumping, Electr. Lett. Vol. 30 (1994) S. 787-788) verwendet.

Sättigbare Absorber sind bisher in ihrer Datenrate auf etwa 5 Gb/s beschränkt (siehe IEEE Phot. Tech. Lett., Vol. 3 (1991) S. 942-945).

Mit Glasfasern wurden bereits Datenraten von 40 Gb/s erreicht. Mit Faserlängen von etwa 10 km sind sie jedoch schlecht zu integrieren.

Mit optischen Verstärkern im Resonator wurden 20 Gb/s (siehe Electr. Lett. Vol. 30 (1994), S. 151-152) bzw. mit Mehrsektions-DFB-Lasern 18 GHz (siehe IEEE Phot. Tech. Lett. Vol. 6 (1994), S. 106-108) erreicht.

Vorteil einer Anordnung mit einem optischen Verstärker im Resonator verglichen mit Mehrsektions-DFB-Lasern ist, daß das nichtlineare Element besser getrennt ist vom Restresonator mit seinem Verstärkungsmedium und daher gezielter beeinflußt werden kann. So wurde bereits ein Vorschlag gemacht, wie der Takt mit einem optischen Verstärker im Resonator bis auf 100 Gb/s gebracht werden kann, nämlich durch intensives Pumpen des nichtlinear arbeitenden optischen Verstärkers mit einem kontinuierlich arbeitenden Laser (siehe Elect. Lett. Vol. 30 (1994) S. 787-788).

Die im Patentanspruch 1 angegebene Erfindung, deren im Oberbegriff angegebene Gattung aus Electr. Lett. Vol. 30 (1994), S. 151-152 oder auch Elect. Lett. Vol. 30 (1994) S. 787-788 bekannt ist, hat den Vorteil, daß die Laseranordnung in einem Baustein integrierbar und die Rückgewinnung des Zeittaktes aus dem modulierten Eingangssignal in optischen Netzwerken mit hohen Datenraten von 10Gb/s und mehr ermöglicht ist.

Die erfindungsgemäße Anordnung, die als optische Uhr bezeichnet werden kann, entspricht einem modegelockten Laser, der einen optischen Resonator mit einem wellenlängenselektiven optischen Übertragungskanalabschnitt und auf jeder Seite dieses Kanalabschnitts mindestens einen optischen Verstärker aufweist, wobei erfindungswesentlich die Stellung des weilenlängenselektiven optischen Übertragungskanalabschnitts im Resonator ist. Der optische Übertragungskanalabschnitt ist vorteilhafterweise mit einem bidirektionalen optischen Wellenlängendemultiplexer realisierbar, der in der einen Richtung betrieben als Demultiplexer und in der entgegengesetzten Richtung betrieben als Multiplexer wirkt.

Die erfindungsgemäße Anordnung kann vorteilhaft zur Regenera tion des optischen Eingangssignals in einem optischen Repeater verwendet werden.

Bevorzugte und vorteilhafte Ausgestaltungen der erfindungsgemäßen Anordnung gehen aus den Unteransprüchen hervor.

Die Erfindung wird anhand der Figuren in der nachfolgenden Beschreibung beispielhaft näher erläutert. Es zeigen, jeweils in schematischer Darstellung,
- Figur 1: ein erstes Ausführungsbeispiel einer erfindungsgemäßen Anordnung,
- Figur 2: ein zweites Ausführungsbeispiel einer erfindungsgemäßen Anordnung und
- Figur 3: ein drittes Ausführungsbeispiel einer erfindungsgemäßen Anordnung.

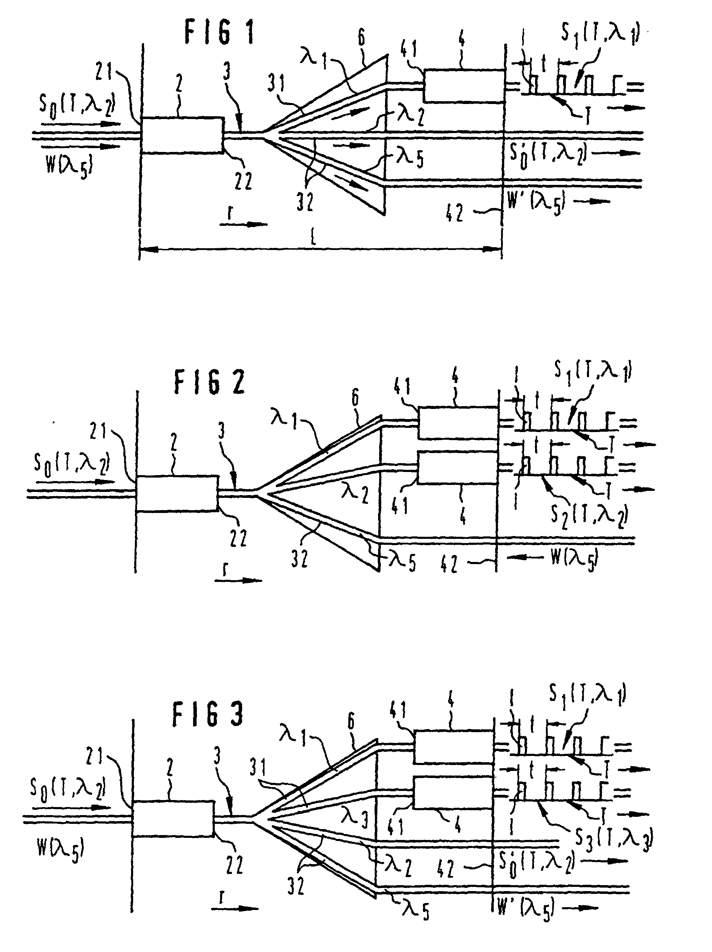

Die in den Figuren 1 bis 3 beispielhaft dargestellte erfindungsgemäße Laseranordnung gewinnt den Zeittakt T aus einem auf einer mit diesem Takt T getakteten Eingangsträgerwellenlänge λ₂ modulierten optischen Eingangssignal Sₒ zurück und weist einen optischen Resonator 1 aus einem zwischen zwei Resonatorspiegeln 21 und 42 sich erstreckenden bidirektionalen optischen Übertragungskanal 3 vorbestimmter optischer Länge L auf.

Der Übertragungskanal 3 weist zwischen den beiden Resonatorspiegeln 21 und 42 wenigsten zwei nichtlineare optische Verstärker, beispielsweise die beiden Verstärker 2, 4 nach Figur 1, und zwischen diesen Verstärkern 2, 4 einen wellenlängenselektiven Übertragungskanalabschnitt 31 auf.

Die beiden Verstärker 2, 4 sind in einer von einem Resonatorspiegel, beispielsweise dem Resonatorspiegel 21, zum anderen Resonatorspiegel, im Beispielsfall zum Resonatorspiegel 42 weisenden Übertragungsrichtung r des Übertragungskanals 3 nacheinander angeordnet.

Der Übertragungskanalabschnitt 31 verbindet die beiden Verstärker 2, 4 optisch und dient zur Übertragung eines optischen Signals auf einer vorbestimmten optischen Trägerwellenlänge zwischen diesen beiden Verstärkern 2, 4, beispielsweise des Signals S₁' auf der vorbestimmten Trägerwellenlänge λ₁ in Figur 1.

Bei Zugrundelegung der oben angegebenen Übertragungsrichtung r - es könnte auch die entgegengesetzte Richtung genommen werden - wird das Eingangssignal Sₒ auf der Eingangsträgerwellenlänge λ₂ durch den Resonatorspiegel 21 in den Übertragungskanal 3 eingekoppelt. Der andere Resonatorspiegel 42 dient zum Auskoppeln eines von dem in der angenommenen Übertragungsrichtung r zweiten und letzten Verstärker 4 stammenden optischen Signals S₁ auf der vorbestimmten Trägerwellenlänge.

Der Resonator 1 bildet zusammen mit dem ersten Verstärker 2, dem letzten Verstärker 4 und dem wellenlängenselektiven Übertragungskanalabschnitt 31 einen modegelockten Laser, wenn der erste Verstärker 2 bezüglich des eingekoppelten Eingangssignals Sₒ im nichtlinearen Bereich arbeitet. Dazu wird beispielsweise die Lichtleistung des Eingangssignals Sₒ so hoch gewählt, daß der erste Verstärker 2 im nichtlinearen Bereich arbeitet, d.h. die optische Signalleistung höher als die Sättigungsleistung ersten Verstärkers 2 ist. Im Resonator 1 tritt dann eine Verstärkung auf, die für alle optischen Wellenlängen mit der Signalrate des Eingangssignals Sₒ moduliert wird, und die longitudinalen Lasermoden der Laseranordnung werden aneinandergekoppelt, so daß Impulse mit der Taktrate des Eingangssignals Sₒ auftreten. Die Impulsbreite des modegelockten Lasers hängt von der Modulation des Eingangssignals Sₒ, von der Bitfolge und von der Bandbreite des wellenlängenselektiven Übertragungskanalabschnitts 31 ab.

Das vom letzten Verstärker 42 stammende und durch den anderen Resonatorspiegel 42 ausgekoppelte optische Signal S₁ weist von selbst periodisch in einem Taktzyklus t des Taktes T auftretende Impulse I auf, die den rückgewonnenen Takt T definieren.

Um die Laufzeit der Impulse durch den Resonator 1 an den Taktzyklus t des Taktes T des Eingangssignals Sₒ derart anzupassen, daß sie ein ganzzahliges Vielfaches dieses Taktzyklus t beträgt, kann die optische Länge L des Übertragungskanals 3 des Resonators 1 beispielsweise durch Trimmen der Temperatur eines optischen Verstärkers 2 und/oder 4 angepaßt werden.

Beim Beispiel nach Figur 1 gibt es neben dem ersten Verstärker 2 nur den einen letzten optischen Verstärker 4.

Allerdings weist beim Beispiel nach Figur 1 der Übertragungskanal 3 einen zwischen dem ersten Verstärker 2 und dem anderen. Resonatorspiegel 42 angeordneten zusätzlichen wellenlängenselektiven Übertragungskanalabschnitt 32 auf, der den ersten Verstärker 2 optisch direkt mit dem anderen Resonatorspiegel 42 verbindet. Dieser zusätzliche Übertragungskanalabschnitt 32 ist derart ausgebildet, daß dem anderen Resonatorspiegel 42 ein vom ersten Verstärker 2 stammendes optisches Signal Sₒ' auf der Eingangsträgerwelle λ₂ zugeführt und aus dem anderen Resonatorspiegel 42 auskoppelbar ist, das von selbst mit dem Takt T getaktet und entsprechend dem Eingangssignal Sₒ moduliert ist, so daß es dem Einkoppelsignal Sₒ entspricht.

Beim Beispiel nach Figur 1 könnte es beispielsweise auch so eingerichtet sein, daß der mit dem letzten Verstärker 4 verbundene Übertragungskanalabschnitt 31 nur die Eingangsträgerwellenlänge λ₂ und der direkt mit dem anderen Resonatorspiegel 42 verbundene zusätzliche Übertragungskanalabschnitt 32 nur die Trägerwellenlänge λ₁ überträgt. In diesem Fall, der in der Figur 1 nicht dargestellt ist, wäre aus dem Resonatorfenster 42 einerseits ein vom ersten Verstärker 2 stammendes und über den Übertragungskanalabschnitt 31 übertragenes optisches Signal S₂ auf der Eingangsträgerwellenlänge λ₂ und andererseits ein vom ersten Verstärker 2 stammendes und über den zusätzlichen Übertragungskanalabschnitt 32 übertragenes optisches Signal S₁ auf der Trägerwellenlänge λ₁ auskoppelbar. Das Signal S₂ auf der Eingangsträgerwellenlänge λ₂ hätte von selbst periodisch im Taktzyklus t des Taktes T auftretende Impulse I, die den rückgewonnenen Takt T definieren und das Signal S₁ auf der Trägerwellenlänge λ₁ wäre ein von selbst mit dem Takt T getaktetes und entsprechend dem Eingangssignal Sₒ moduliertes Signal. Dieses Signal S₁ entspräche dem Signal Sₒ' bzw. Eingangssignal Sₒ, das von der Eingangsträgerwellenlänge λ₂ auf die Trägerwellenlänge λ₁ konvertiert ist.

Eine Wellenlängenkonversion ist generell in dem Fall, daß Signale auf verschiedenen Trägerwellenlängen aus dem anderen Resonatorspiegel 42 ausgekoppelt werden, möglich.

Eine Wellenlängenkonversion des Eingangssignals Sₒ ist auch dadurch möglich, daß ein von einem letzten Verstärker 4 stammendes und aus dem Resonatorspiegel 42 ausgekoppeltes optisches Signal auf einer Trägerwellenlänge, das von selbst periodisch im Taktzyklus des Taktes auftretende Impulse aufweist, die den rückgewonnenen Takt T definieren, beispielsweise das Signal S₁ auf der Trägerwellenlänge λ₁ nach Figur 1, entsprechend dem Eingangssignal Sₒ moduliert wird. Dieses modulierte entspräche dem Eingangssignal Sₒ, das von der Eingangsträgerwellenlänge λ₂ auf diese Trägerwellenlänge konvertiert worden ist.

Das Ausführungsbeispiel nach Figur 2 unterscheidet sich vom Ausführungsbeispiel nach Figur 1 im wesentlichen dadurch, daß der Übertragungskanal 3 zwischen den beiden Resonatorspiegeln 21 und 42 neben dem ersten nichtlinearen optischen Verstärker 2 zwei in der Übertragungsrichtung r dem ersten Verstärker 2 nachgeordnete letzte nichtlineare optische Verstärker 4 sowie einen zwischen dem ersten Verstärker 2 und den beiden letzten Verstärkern 4 angeordneten wellenlängenselektiven Übertragungskanalabschnitt 31 aufweist, der den ersten Verstärker 2 optisch mit jedem letzten Verstärker 4 verbindet und derart ausgebildet ist, daß zwischen dem ersten Verstärker 2 und jedem letzten Verstärker je ein optisches Signal S₁, S₂ auf einer diesem letzten Verstärker 4 zugeordneten vorbestimmten Trägerwellenlänge λ₁ bzw. λ₂ übertragen wird, wobei - der andere Resonatorspiegel 42 zum Auskoppeln 4 des von jedem letzten Verstärker 4 stammenden optischen Signals S₁ bzw. S₂ auf der diesem letzten Verstärker 4 zugeordneten vorbestimmten Trägerwelle λ₁ bzw. λ₂ aus dem Übertragungskanal 3 dient, das jeweils von selbst periodisch in dem Taktzyklus t des Taktes T auftretende Impulse I aufweist, die den rückgewonnenen Takt T definieren.

Speziell ist in der Figur 2 dem oberen letzten Verstärker 4 die Trägerwellenlänge λ₁ und dem unteren letzten Verstärker 4 die Eingangsträgerwellenlänge λ₂ zugeordnet. Der rückgewonnene Takt T kann in diesem speziellen Fall zwischen den Trägerwellenlängen λ₁ und λ₂ geschaltet werden.

Durch zwei oder mehrere derartige letzte optische Verstärker 4 ist generell die Möglichkeit gegeben, die Trägerwellenlänge des rückgewonnenen Taktes T auf einem vorgegebenen Raster zu schalten.

Auch beim Beispiel nach Figur 2 wäre Wellenlängenkonversion möglich, wenn das Ausgangssignal S₁ entsprechend dem Eingangssignal Sₒ moduliert würde.

Das Ausführungsbeispiel nach Figur 3 unterscheidet sich vom Ausführungsbeispiel nach Figur 2 im wesentlichen dadurch, daß dem unteren letzten Verstärker 4 nicht die Eingangsträgerwellenlänge λ₂, sondern eine sowohl davon als auch von der dem oberen letzten Verstärker 4 zugeordneten Trägerwellenlänge λ₁ verschiedene Trägerwellenlänge λ₃ zugeordnet ist, und daß wie beim Beispiel nach Figur 1 der Übertragungskanal 3 einen zwischen dem ersten Verstärker 2 und dem anderen Resonatorspiegel 42 angeordneten zusätzlichen wellenlängenselektiven Übertragungskanalabschnitt 32 aufweist, der den ersten Verstärker 2 optisch direkt mit dem anderen Resonatorspiegel 42 verbindet. Dieser zusätzliche Übertragungskanalabschnitt 32 ist derart ausgebildet, daß dem anderen Resonatorspiegel 42 ein vom ersten Verstärker 2 stammendes optisches Signal Sₒ' auf der Eingangsträgerwelle λ₂ zugeführt und aus dem anderen Resonatorspiegel 42 auskoppelbar ist, das von selbst mit dem Takt T getaktet und entsprechend dem Eingangssignal Sₒ moduliert ist, so daß es dem Einkoppelsignal Sₒ entspricht.

Aus dem Resonatorspiegel 42 ist ein vom unteren letzten Verstärker 4 stammendes optisches Signal S₃ auf der diesem unteren letzten Verstärker 4 zugeordneten Trägerwellenlänge λ 3 auskoppelbar, das von selbst im Taktzyklus t des Taktes T auftretende Impulse I aufweist, die den rückgewonnenen Takt T definieren. Der rückgewonnene Takt T kann in diesem speziellen Fall zwischen den Trägerwellenlängen λ₁ und λ₃ geschaltet werden. Auch hier ist Wellenlängenkonversion möglich, wenn zumindest eines der beiden Signale S₁ und S₃ entsprechend dem Eingangssignal Sₒ moduliert wird.

Um die Taktrate des von der optischen Uhr rückgewonnenen Taktes T möglichst hoch treiben zu können, muß der nichtlinear arbeitende erste optische Verstärker 2 mit einer intensiven ungedämpften optischen Welle W einer sowohl von der Eingangsträgerwellenlänge λ₂ als auch der oder den von dieser Wellenlänge λ₂ verschiedenen Trägerwellenlängen λ_{1,} λ₃ verschiedenen weiteren optischen Wellenlänge λ₅ bestrahlt werden (siehe Elect. Lett. Vol. 30 (1994) S. 787-788). Diese weitere optische Wellenlänge λ₅ kann in den Resonator 1 entweder über einen vorhandenen zusätzlichen optischen Übertragungskanalabschnitt 32 eingekoppelt werden und strahlt dann dem eingekoppelten Eingangssignal Sₒ entgegen oder wird dem Eingangssignal Sₒ zugemischt und dann vom eingekoppelten Signal getrennt und an eine andere Stelle abgestrahlt.

Bei den Beispielen nach Figur 1 und Figur 3 ist es so eingerichtet, daß die ungedämpfte Welle W durch den einen Resonatorspiegel 21 in den ersten Verstärker 2 eingekoppelt wird. Aus dem ersten Verstärker 2 wird eine der eingekoppelten Welle W entsprechende optische Welle W' der gleichen optischen Wellenlänge λ₅ ausgekoppelt, die über den zusätzlichen Übertragungskanalabschnitt 32 dem anderen Resonatorspiegel 42 zugeführt und aus diesem Resonatorspiegel 42 auskoppelbar ist. Der zusätzliche Übertragungskanalabschnitt 32 nach Figur 1 und Figur 3 ist dazu so ausgebildet, daß er neben der Eingangsträgerwellenlänge λ₂ auch die Wellenlänge λ₅ der optischen Welle W überträgt.

Beim Beispiel nach Figur 2 wird dagegen die ungedämpfte Welle W durch den anderen Resonatorspiegel 42 über den zusätzlichen Übertragungskanalabschnitt 32 in den ersten Verstärker 2 eingekoppelt.

Der Übertragungskanalabschnitt 31 und/oder zusätzliche Übertragungskanalabschnitt 32 sind/ist vorzugsweise durch einen bidirektionalen optischen Wellenlängendemultiplexer 6 realisiert, wobei ein integrierbarer Demultiplexer den Vorzug hat.

Ein anwendbares Verfahren zur Integration eines Demultiplexers mit aktiven optoelektronischen Elementen ist in der veröffentlichten europäischen Patentanmeldung 0 497 358 angegeben.

Der eine Resonatorspiegel 21 des Resonators 1 ist vorzugsweise ein teildurchlässig verspiegelter Verstärkereingang des ersten optischen Verstärkers 2. Der andere Resonatorspiegel 42 des Resonators 1 ist vorzugsweise ein teildurchlässiger Spiegel, der einen teildurchlässig verspiegelten optischen Verstärkerausgang eines oder mehrerer letzter Verstärker 4 umfaßt.

Ein Verstärkerausgang 22 des ersten optischen Verstärkers 2 und der Verstärkereingang 41 jedes letzten optischen Verstärkers 4, an die der Übertragungskanalabschnitt 31 optisch gekoppelt ist, sind vorzugsweise optisch entspiegelt.

## Patentansprüche

1. Laseranordnung zur Rückgewinnung eines Zeittaktes (T) aus einem auf einer optischen Eingangsträgerwellenlänge (λ₂) mit diesem Takt (T) getakteten modulierten optischen Eingangssignal (Sₒ), bestehend aus
- einem optischen Resonator (1) aus einem zwischen zwei Resonatorspiegeln (21, 42) sich erstreckenden bidirektionalen optischen Übertragungskanal (3) vorbestimmter optischer Länge (L) und
- zumindest einem im Übertragungskanal (3) zwischen den Resonatorspiegeln (21, 42) angeordneten nichtlinearen optischen Verstärker (2), wobei
- das Eingangssignal (Sₒ) durch einen (21) der beiden Resonatorspiegel (21, 42) in den Übertragungskanal (3) einkoppelbar, das eingekoppelte Eingangssignal (Sₒ) im Verstärker (2) optisch verstärkbar und durch einen der beiden Resonatorspiegel (42) ein den rückgewonnenen Takt (T) definierendes optisches Signal (S₁, S₂, S₃) aus dem Übertragungskanal (3) auskoppelbar ist,
**dadurch gekennzeichnet,**
- **daß** der Übertragungskanal (3) zwischen den beiden Resonatorspiegeln (21, 42) wenigstens zwei in einer von einem Resonatorspiegel (. 21) zum anderen (42) weisenden Übertragungsrichtung (r) des Übertragungskanals (3) nacheinander angeordnete nichtlineare optische Verstärker (2, 4) und zwischen diesen beiden Verstärkern (2, 4) einen diese Verstärker (2, 4) verbindenden wellenlängenselektiven Übertragungskanalabschnitt (3) zur Übertragung eines optischen Signals (S₁',S₂',S₃') auf einer vorbestimmten optischen Trägerwellenlänge (λ₁, λ₂, λ₃) aufweist, wobei
- der eine Resonatorspiegel (21) zum Einkoppeln des Eingangssignals (Sₒ) auf der Eingangsträgerwellenlänge (λ₂) in den Übertragungskanal (3) dient
- der in der Übertragungsrichtung (r) erste Verstärker (2) bezüglich des eingekoppelten Eingangssignals (Sₒ) im nichtlinearen Bereich arbeitet und
- der andere Resonatorspiegel (42) zum Auskoppeln eines von dem in der Übertragungsrichtung (r) letzten Verstärker (4) stammenden optischen Signals (S₁, S₂, S₃) auf der durch den Übertragungskanalabschnitt (31) vorbestimmten Trägerwelle (λ ₁, λ₂, λ₃) aus dem Übertragungskanal (3) dient, das von selbst periodisch in einem Taktzyklus (t) des Taktes (T) auftretende Impulse (I) aufweist, die den rückgewonnenen Takt (T) definieren.

2. Anordnung nach Anspruch 1,
**dadurch gekennzeichnet,**
**daß** der Übertragungskanal (3) zwischen den beiden Resonatorspiegeln (21, 42) einen ersten nichtlinearen optischen Verstärker (2) und zwei oder mehrere in der Übertragungsrichtung (r) dem ersten Verstärker (2) nachgeordnete letzte nichtlineare optische Verstärker (4) sowie einen zwischen dem ersten Verstärker (2) und den letzten Verstärkern (4) angeordneten wellenlängenselektiven. Übertragungskanalabschnitt (31) aufweist, der den ersten Verstärker (2) optisch mit jedem letzten Verstärker (4) verbindet und derart ausgebildet ist, daß zwischen dem ersten Verstärker (2) und jedem letzten Verstärker je ein optisches Signal (S₁', S₂'; S₁', S₃') auf einer diesem letzten Verstärker (4) zugeordneten vorbestimmten Trägerwellenlänge (λ₁, λ₂; λ₁, λ₃) übertragen wird, wobei - der andere Resonatorspiegel (42) zum Auskoppeln(4) des von jedem letzten Verstärker (4) stammenden optischen Signals (S₁, S₂, S₃) auf der diesem letzten Verstärker (4) zugeordneten vorbestimmten Trägerwelle (λ₁, λ₂, λ₃) aus dem Übertragungskanal (3) dient, das von selbst periodisch in einem Taktzyklus (t) des Taktes (T) auftretende Impulse (I) aufweist, die den rückgewonnenen Takt (T) definieren.

3. Anordnung nach Anspruch 2,
**dadurch gekennzeichnet,**
**daß** die verschiedenen letzten Verstärkern (4) zugeordneten vorbestimmten Trägerwellenlängen (λ₁, λ₂, λ₃) voneinander verschieden sind.

4. Anordnung nach einem der Ansprüche 2 und 3,
**dadurch gekennzeichnet,**
**daß** jede einem letzten Verstärker (4) zugeordnete vorbestimmte Trägerwellenlänge (λ₁, λ₃) verschieden von der Eingangsträgerwellenlänge (λ₂) ist.

5. Anordnung nach einem der Ansprüche 2 und 3,
**dadurch gekennzeichnet,**
**daß** eine einem letzten Verstärker (4) zugeordnete vorbestimmte Trägerwellenlänge gleich der Eingangsträgerwellenlänge (λ₂) ist.

6. Anordnung nach einem der vorhergehenden Ansprüche, **gekennzeichnet durch** Mittel zur Modulation eines aus dem anderen Resonatorspiegel (42) ausgekoppelten und von einem letzten Verstärker (4) stammenden optischen Signals (S₁, S₂, S₃) auf der diesem letzten Verstärker zugeordneten vorbestimmten Trägerwellenlänge (λ₁, λ₂, λ₃).

7. Anordnung nach einem der vorhergehenden Ansprüche,
**dadurch gekennzeichnet,**
**daß** der Übertragungskanal (3) einen zwischen dem ersten Verstärker (2) und dem anderen Resonatorspiegel (42) angeordneten zusätzlichen wellenlängenselektiven Übertragungskanalabschnitt (32) aufweist, der den ersten Verstärker (2) optisch direkt mit dem anderen Resonatorspiegel (42) verbindet und derart ausgebildet ist, daß zwischen dem ersten Verstärker (2) und dem anderen Resonatorspiegel (42) ein oder mehrere optische Signale (Sₒ', W') mit voneinander verschiedenen vorbestimmten optischen Wellenlängen (λ₂, λ₅) übertragen werden, die räumlich voneinander getrennt aus dem Resonatorspiegel (42) auskoppelbar sind.

8. Anordnung nach Anspruch 7,
**dadurch gekennzeichnet,**
**daß** über den zusätzlichen Übertragungskanalabschnitt (32) dem anderen Resonatorspiegel (42) ein vom ersten Verstärker (2) stammendes optisches Signal (Sₒ') auf der Eingangsträgerwelle (λ₂) zugeführt und aus dem anderen Resonatorspiegel (42) auskoppelbar ist, das von selbst mit dem Takt (T) getaktet und entsprechend dem Eingangssignal (Sₒ) moduliert ist.

9. Anordnung nach einem der vorhergehenden Ansprüche,
**dadurch gekennzeichnet,**
**daß** in den ersten Verstärker (2) zusätzlich zum Eingangssignal (Sₒ) eine ungedämpfte optische Welle (W) einer sowohl von der Eingangsträgerwellenlänge (λ₂) als auch der oder den von dieser Wellenlänge (λ₂) verschiedenen vorbestimmten Trägerwellenlängen (λ₁, λ₃) verschiedenen weiteren optischen Wellenlänge (λ₅) einkoppelbar ist.

10. Anordnung nach Anspruch 9,
**dadurch gekennzeichnet,**
**daß** die ungedämpfte Welle (W) durch den einen Resonatorspiegel (21) in den ersten Verstärker (2) einkoppelbar ist.

11. Anordnung nach Anspruch 9 oder 10, **dadurch gekennzeichnet,**
**daß** aus dem ersten Verstärker (2) eine der eingekoppelten unge dämpften optischen Welle (W) entsprechende optische Welle (W') der gleichen optischen Wellenlänge (λ₅) auskoppelbar ist, die über den zusätzlichen Übertragungskanalabschnitt (32) dem anderen Resonatorspiegel (42) zugeführt und aus diesem Resonatorspiegel (42) auskoppelbar ist.

12. Anordnung nach Anspruch 9,
**dadurch gekennzeichnet,**
**daß** die ungedämpfte Welle (W) durch den anderen Resonatorspiegel (42) über den zusätzlichen Übertragungskanalabschnitt (32) in den ersten Verstärker (2) einkoppelbar ist.

13. Anordnung nach einem der Ansprüche, 2 bis 12
**dadurch gekennzeichnet,**
**daß** der Übertragungskanalabschnitt (31) und/oder zusätzliche Übertragungskanalabschnitt (32) durch einen bidirektionalen optischen Wellenlängendemultiplexer realisiert sind/ist.

## Claims

1. Laser arrangement for recovering a clock (T) from a modulated optical input signal (Sₒ) clocked by this clock (T) on an optical input carrier wavelength, (λ₂) which arrangement comprises
- an optical resonator (1) composed of a bidirectional optical transmission channel (3) of predetermined optical length (L) and extending between two resonator mirrors (21, 42), and
- at least one nonlinear optical amplifier (2) arranged in the transmission channel (3) between the resonator mirrors (21, 42), it being the case that
- the input signal (Sₒ) can be launched into the transmission channel (3) by one (21) of the two resonator mirrors (21, 42), the launched input signal (Sₒ) can be amplified optically in the amplifier (2), and an optical signal (S₁, S₂, S₃) defining the recovered clock (T) can be coupled out of the transmission channel (3) by one of the two resonator mirrors (42),
**characterized**
- **in that**, between the two resonator mirrors (21, 42), the transmission channel (3) has at least two nonlinear optical amplifiers (2, 4) arranged sequentially in a transmission direction (r) of the transmission channel (3) pointing from one resonator mirror (21) to the other (42), and, between these two amplifiers (2, 4), it has a wavelength-selective transmission channel section (31), connecting these amplifiers (2, 4), for transmitting an optical signal (S₁', S₂', S₃') on a predetermined optical carrier wavelength (λ₁, λ₂, λ₃), it being the case that
- one resonator mirror (21) serves to launch the input signal (Sₒ) into the transmission channel (3) on the input carrier wavelength (λ₂)
- the first amplifier (2) in the transmission direction (r) operates in the nonlinear region with respect to the launched input signal (Sₒ) and
- the other resonator mirror (42) serves to couple out of the transmission channel (3) on the carrier wavelength (λ₁, λ₂, λ₃) predetermined by the transmission channel section (31) an optical signal (S₁, S₂, S₃) which originates from the last amplifier (4) in the transmission direction (r) and which has pulses (I) which occur inherently periodically in a clock cycle (t) of the clock (T) and define the recovered clock (T).

2. Arrangement according to Claim 1, **characterized in that**, between the two resonator mirrors (21, 42), the transmission channel (3) has a first nonlinear optical amplifier (2) and two or more last nonlinear optical amplifiers (4), which are arranged downstream of the first amplifier (2) in the transmission direction (r), as well as a wavelength-selective transmission channel section (31) which is arranged between the first amplifier (2) and the last amplifiers (4), connects the first amplifier (2) optically to each last amplifier (4) and is designed in such a way that one optical signal (S₁', S₂'; S₁', S₃') each is transmitted between the first amplifier (2) and each last amplifier on a predetermined carrier wavelength (λ₁, λ₂; λ₁, λ₃) assigned to this last amplifier (4), it being the case that
- the other resonator mirror (42) serves to couple out of the transmission channel (3) on the predetermined carrier wavelength (λ₁, λ₂, λ₃) assigned to this last amplifier (4) the optical signal (S₁, S₂, S₃) which originates from each last amplifier (4) and which has pulses (I) which occur inherently periodically in a clock cycle (t) of the clock (T) and define the recovered clock (T).

3. Arrangement according to Claim 2, **characterized in that** the predetermined carrier wavelengths (λ₁, λ₂, λ₃) assigned to different last amplifiers (4) differ from one another.

4. Arrangement according to either of Claims 2 and 3, **characterized in that** each predetermined carrier wavelength (λ₁, λ₃) assigned to a last amplifier (4) differs from the input carrier wavelength (λ₂).

5. Arrangement according to either of Claims 2 and 3, **characterized in that** one predetermined carrier wavelength assigned to a last amplifier (4) is equal to the input carrier wavelength (λ₂).

6. Arrangement according to one of the preceding claims, **characterized by** means for the modulation of an optical signal (S₁, S₂, S₃), coupled out of the other resonator mirror (42) and originating from a last amplifier (4), on the predetermined carrier wavelength (λ₁, λ₂, λ₃) assigned to this last amplifier.

7. Arrangement according to one of the preceding claims, **characterized in that** the transmission channel (3) has an additional wavelength-selective transmission channel section (32) which is arranged between the first amplifier (2) and the other resonator mirror (42), connects the first amplifier (2) optically directly to the other resonator mirror (42) and is designed in such a way that there are transmitted between the first amplifier (2) and the other resonator mirror (42) one or more optical signals (Sₒ', W') which have mutually differing predetermined optical wavelengths (λ₂, λ₅) and can be coupled out of the resonator mirror (42) in a fashion spatially separated from one another.

8. Arrangement according to Claim 7, **characterized in that**, via the additional transmission channel section (32), the other resonator mirror (42) is fed on the input carrier wavelength (λ₂) an optical signal (Sₒ') which originates from the first amplifier (2), can be coupled out of the other resonator mirror (42) and is inherently clocked by the clock (T) and modulated in accordance with the input signal (Sₒ).

9. Arrangement according to one of the preceding claims, **characterized in that**, in addition to the input signal (Sₒ), it is possible to launch into the first amplifier (2) an undamped optical wave (W) of a further optical wavelength (λ₅), which differs both from the input carrier wavelength (λ₂) and from the predetermined carrier wavelengths (λ₁, λ₃), which differs from this wavelength (λ₂).

10. Arrangement according to Claim 9, **characterized in that** the undamped wave (W) can be launched into the first amplifier (2) by one resonator mirror (21).

11. Arrangement according to Claim 9 or 10, **characterized in that** it is possible to couple out of the first amplifier (2) an optical wave (W') which corresponds to the launched undamped optical wave (W), has the same optical wavelength (λ₅) as the latter, is fed to the other resonator mirror (42) via the additional transmission channel section (32) and can be coupled out of this resonator mirror (42).

12. Arrangement according to Claim 9, **characterized in that** the undamped wave (W) can be launched into the first amplifier (2) by the other resonator mirror (42) via the additional transmission channel section (32).

13. Arrangement according to one of Claims 2 to 12, **characterized in that** the transmission channel section (31) and/or additional transmission channel section (32) are/is realized by a bidirectional optical wavelength demultiplexer.

## Revendications

1. Dispositif laser pour la récupération d'une horloge (T) contenue dans un signal optique modulé d'entrée (Sₒ) synchronisé par cette horloge (T) sur une longueur d'onde porteuse optique d'entrée (λ₂), comprenant
- un résonateur optique (1) formé d'un canal de transmission optique bidirectionnel (3) de longueur optique prédéterminée (L) s'étendant entre deux miroirs de résonateur (21, 42) et
- au moins un amplificateur optique non linéaire (2) placé entre les miroirs de résonateur (21, 42) dans le canal de transmission (3),
- le signal d'entrée (Sₒ) pouvant être injecté dans le canal de transmission (3) par un (21) des deux miroirs de résonateur (21, 42), le signal d'entrée (Sₒ) injecté pouvant être optiquement amplifié dans l'amplificateur (2) et un signal optique (S₁, S₂, S₃) définissant l'horloge (T) récupérée pouvant être extrait du canal de transmission (3) par un des deux miroirs de résonateur (42),
**caractérisé en ce que**
- le canal de transmission (3) comprend entre les deux miroirs de résonateur (21, 42) au moins deux amplificateurs optiques non linéaires (2, 4) placés l'un après l'autre dans un sens de transmission (r) du canal de transmission (3) allant d'un miroir de résonateur (21) à l'autre (42) et entre ces deux amplificateurs (2, 4) un tronçon de canal de transmission (3) sélectif en longueur d'onde reliant ces amplificateurs (2, 4) en vue de la transmission d'un signal optique (S₁', S₂', S₃') sur une longueur d'onde porteuse optique prédéterminée (λ₁, λ₂, λ₃),
- ledit un miroir de résonateur (21) servant à injecter le signal d'entrée (Sₒ) sur la longueur d'onde porteuse d'entrée (λ₂) dans le canal de transmission (3)
- le premier amplificateur (2) dans le sens de transmission (r) fonctionnant dans la partie non linéaire par rapport au signal d'entrée (Sₒ) et
- ledit autre miroir de résonateur (42) servant à extraire un signal optique (S₁, S₂, S₃) provenant du dernier amplificateur (4) dans le sens de transmission (r), sur l'onde porteuse (λ₁, λ₂, λ₃) prédéterminée par le tronçon de voie de transmission (31), du canal de transmission (3), lequel signal comprend des impulsions (I) se produisant automatiquement de manière périodique dans un cycle d'horloge (t) de l'horloge (T) et qui définissent l'horloge (T) récupérée.

2. Dispositif selon la revendication 1, **caractérisé en ce que** le canal de transmission (3) comprend entre les deux miroirs de résonateur (21, 42) un premier amplificateur optique non linéaire (2) et deux ou plusieurs derniers amplificateurs optiques non linéaires (4) montés à la suite du premier amplificateur (2) dans le sens de transmission (r), ainsi qu'un tronçon de canal de transmission (31) sélectif en longueur d'onde placé entre le premier amplificateur (2) et les derniers amplificateurs (4), qui relie optiquement le premier amplificateur (2) à chaque dernier amplificateur (4) et est réalisé de manière à transmettre entre le premier amplificateur (2) et chaque dernier amplificateur respectivement un signal optique (S₁', S₂' ; S₁', S₃') sur une longueur d'onde porteuse prédéterminée (λ₁, λ₂ ; λ₁, λ₃) attribuée à ce dernier amplificateur (4), l'autre miroir de résonateur (42) servant à extraire le signal optique (S₁, S₂, S₃) provenant de chaque dernier amplificateur (4), sur l'onde porteuse prédéterminée (λ₁, λ₂, λ₃) attribuée à ce dernier amplificateur (4), du canal de transmission (3), lequel signal comprend des impulsions (I) se produisant automatiquement de manière périodique dans un cycle d'horloge (t) de l'horloge (T) et qui définissent l'horloge (T) récupérée.

3. Dispositif selon la revendication 2, **caractérisé en ce que** les longueurs d'onde porteuse prédéterminées (λ₁, λ₂, λ₃) attribuées à différents derniers amplificateurs (4) sont différentes l'une de l'autre.

4. Dispositif selon l'une des revendications 2 et 3, **caractérisé en ce que** chaque longueur d'onde porteuse prédéterminée (λ₁, λ₃) attribuée à un demier amplificateur (4) est différente de la longueur d'onde porteuse d'entrée (λ₂).

5. Dispositif selon l'une des revendications 2 et 3, **caractérisé en ce qu'**une longueur d'onde porteuse prédéterminée attribuée à un dernier amplificateur (4) est identique à la longueur d'onde porteuse d'entrée (λ₂).

6. Dispositif selon l'une des revendications précédentes, **caractérisé par** des moyens de modulation d'un signal optique (S₁, S₂, S₃) extrait de l'autre miroir de résonateur (42) et provenant d'un dernier amplificateur (4) sur la longueur d'onde porteuse prédéterminée (λ₁, λ₂, λ₃) attribuée à ce dernier amplificateur.

7. Dispositif selon l'une des revendications précédentes, **caractérisé en ce que** le canal de transmission (3) comprend un tronçon de canal de transmission supplémentaire (32) sélectif en longueur d'onde placé entre le premier amplificateur (2) et l'autre miroir de résonateur (42), qui relie optiquement le premier amplificateur (2) à l'autre miroir de résonateur (42) et est réalisé de manière à transmettre entre le premier amplificateur (2) et l'autre miroir de résonateur (42) un ou plusieurs signaux optiques (Sₒ', W') ayant des longueurs d'onde optique prédéterminées (λ₂, λ₅) différentes l'une de l'autre et pouvant être extraits séparément l'un de l'autre du miroir de résonateur (42).

8. Dispositif selon la revendication 7, **caractérisé en ce qu'**un signal optique (Sₒ') provenant du premier amplificateur (2) est amené via ledit tronçon de canal de transmission supplémentaire (32), sur l'onde porteuse d'entrée (λ₂), à l'autre miroir de résonateur (42) et peut être extrait dudit autre miroir de résonateur (42), lequel signal est automatiquement synchronisé par l'horloge (T) et modulé selon le signal d'entrée (Sₒ).

9. Dispositif selon l'une des revendications précédentes, **caractérisé en ce qu'**il peut être injecté dans le premier amplificateur (2), en plus du signal d'entrée (Sₒ), une onde optique (W) non amortie d'une autre longueur d'onde optique (λ₅) différente à la fois de la longueur d'onde porteuse d'entrée (λ₂) et de la ou des longueurs d'onde porteuse prédéterminées (λ₁, λ₃) différentes de cette longueur d'onde (λ₂).

10. Dispositif selon la revendication 9, **caractérisé en ce que** ladite onde (W) non amortie peut être injectée par ledit un miroir de résonateur (21) dans le premier amplificateur (2).

11. Dispositif selon la revendication 9 ou 10, **caractérisé en ce qu'**il peut être extrait du premier amplificateur (2) une onde optique (W') correspondant à l'onde optique (W) non amortis injectée et de la même longueur d'onde optique (λ₅), qui est amenée via le tronçon de canal de transmission supplémentaire (32) à l'autre miroir de résonateur (42) et peut être extraite de ce miroir de résonateur (42).

12. Dispositif selon la revendication 9, **caractérisé en ce que** l'onde (W) non amortie peut être injectée par l'autre miroir de résonateur (42), via le tronçon de canal de transmission supplémentaire (32), dans le premier amplificateur (2).

13. Dispositif selon l'une des revendications 2 à 12, **caractérisé en ce que** le tronçon de canal de transmission (31) et/ou le tronçon de canal de transmission supplémentaire (32) sont réalisés/est réalisé par un démultiplexeur optique bidirectionnel de longueurs d'ondes.
